(19)

Europäisches Patentamt

European Patent Office

Office européen des brevets

(11) **EP 4 679 832 A1**

(12) **EUROPEAN PATENT APPLICATION**
published in accordance with Art. 153(4) EPC

(43) Date of publication:
**14.01.2026 Bulletin 2026/03**

(21) Application number: **24767423.7**

(22) Date of filing: **06.03.2024**

(51) International Patent Classification (IPC):
$H04N\ 19/593^{(2014.01)}$    $H04N\ 19/11^{(2014.01)}$
$H04N\ 19/105^{(2014.01)}$    $H04N\ 19/132^{(2014.01)}$
$H04N\ 19/70^{(2014.01)}$    $H04N\ 19/176^{(2014.01)}$

(52) Cooperative Patent Classification (CPC):
**H04N 19/105; H04N 19/11; H04N 19/132;
H04N 19/176; H04N 19/593; H04N 19/70**

(86) International application number:
**PCT/KR2024/002910**

(87) International publication number:
**WO 2024/186135 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023 KR 20230030755
27.04.2023 KR 20230055101**

(71) Applicant: **LG ELECTRONICS INC.**
**Yeongdeungpo-gu**
**Seoul 07336 (KR)**

(72) Inventors:
• YOO, Sunmi
  Seoul 06772 (KR)
• CHOI, Jangwon
  Seoul 06772 (KR)
• HONG, Myungoh
  Seoul 06772 (KR)
• NAM, Junghak
  Seoul 06772 (KR)
• AHN, Yongjo
  Seoul 06772 (KR)

(74) Representative: **Frenkel, Matthias Alexander
Wuesthoff & Wuesthoff
Patentanwälte und Rechtsanwalt PartG mbB
Schweigerstraße 2
81541 München (DE)**

(54) **IMAGE ENCODING/DECODING METHOD AND DEVICE, AND RECORDING MEDIUM STORING BITSTREAM**

(57) An image decoding/encoding method and device according to the present disclosure can derive prediction samples of the current block on the basis of linear model parameters of the current block. Here, the linear model parameters may be derived on the basis of one or more reference samples in a neighboring region of the current block. The prediction samples of the current block may be derived by applying the linear model parameters to the coordinates of the prediction samples in the current block and/or reconstructed samples near the current block.

FIG. 4

```
┌─────────────────────────────────────────────┐
│  DERIVE PREDICTION SAMPLE OF CURRENT BLOCK    │──── S400
│      BASED ON LINEAR MODEL PARAMETER          │
└─────────────────────────────────────────────┘
                      │
                      ▼
┌─────────────────────────────────────────────┐
│  DERIVE RESIDUAL SAMPLE OF CURRENT BLOCK      │──── S410
└─────────────────────────────────────────────┘
                      │
                      ▼
┌─────────────────────────────────────────────┐
│          RECONSTRUCT CURRENT BLOCK            │
│  BASED ON PREDICTION SAMPLE AND RESIDUAL      │──── S420
│           SAMPLE OF CURRENT BLOCK             │
└─────────────────────────────────────────────┘
```

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide an intra prediction method and apparatus.

The present disclosure is to provide a signaling method and apparatus for information related to intra prediction.

The present disclosure is to provide a preprocessing method and apparatus of a reference sample for intra prediction.

The present disclosure is to provide a method and an apparatus for determining a transform kernel of a residual signal based on intra prediction.

[Technical Solution]

An image decoding method and apparatus according to the present disclosure may derive a prediction sample of a current block based on a linear model parameter of the current block, derive a residual sample of the current block, and reconstruct the current block based on the prediction sample and the residual sample of the current block. Here, the linear model parameter may be derived based on one or more reference samples within a neighboring region of the current block.

In the image decoding method and apparatus according to the present disclosure, the prediction sample may be derived by applying the linear model parameter to at least one of a coordinate of the prediction sample within the current block or a pre-reconstructed sample around the current block.

In the image decoding method and apparatus according to the present disclosure, the linear model parameter may be derived based on at least one of a first reference sample included in a first reference sample line of the current block, a coordinate of the first reference sample, or a left reference sample or an upper reference sample of the first reference sample.

In the image decoding method and apparatus according to the present disclosure, at least one of the left reference sample or the upper reference sample of the first reference sample may be included in a second reference sample line of the current block.

In the image decoding method and apparatus according to the present disclosure, the neighboring region may include at least one of a left neighboring region, an upper neighboring region, an upper-left neighboring region, an upper-right neighboring region, or a lower-left neighboring region.

In the image decoding method and apparatus according to the present disclosure, the linear model parameter may be derived as one of a plurality of linear model parameters. Here, the plurality of linear model parameters may be respectively derived for a plurality of sub-regions within a neighboring region.

In the image decoding method and apparatus according to the present disclosure, the plurality of sub-regions may include at least two of a left neighboring region, an upper neighboring region, an upper-left neighboring region, an upper-right neighboring region, or a lower-left neighboring region.

The image decoding method and apparatus according to the present disclosure may obtain from a bitstream at least one of a first flag indicating whether a linear model-based prediction mode is available, or a second flag indicating whether the linear model-based prediction mode is applied to the current block.

The image decoding method and apparatus according to the present disclosure may obtain from the bitstream an index specifying one of a plurality of predefined linear model-based prediction modes.

In the image decoding method and apparatus according to the present disclosure, a predetermined filter may be applied to one or more reference samples within the neighboring region of the current block.

In the image decoding method and apparatus according to the present disclosure, at least one of whether the filter is applied or a type of the filter may be determined based on a size of the current block.

In the image decoding method and apparatus according to the present disclosure, a residual sample of the current block may be derived by performing an inverse transform on a transform coefficient of the current block. Here, the inverse transform may be performed based on a transform kernel for a predefined non-directional mode or an intra prediction mode derived based on the neighboring region.

The image encoding method and apparatus according to the present disclosure may derive a prediction sample of a current block based on a linear model parameter of the current block, derive a residual sample of the current block based on the prediction sample of the current block, derive a transform coefficient from the residual sample of the current block, and generate a bitstream by encoding the transform coefficient. Here, the linear model parameter may be derived based on one or more reference samples within a neighboring region of the current block.

A computer-readable digital storage medium storing encoded video/image information that causes a decoding apparatus according to the present disclosure to perform an image decoding method is provided.

A computer-readable digital storage medium storing video/image information generated according to an image encoding method according to the present disclosure is provided.

A method and an apparatus for transmitting video/image information generated according to an image encoding method according to the present disclosure are provided.

[Technical Effects]

The linear model-based prediction mode according to the present disclosure may improve intra prediction performance by reflecting overall variation or local variation within a block.

According to the present disclosure, by defining a plurality of linear model-based prediction modes and/or linear model parameters and selectively using one of them, an optimal linear model parameter for a current block may be derived.

According to the present disclosure, a linear model-based prediction mode and/or a linear model parameter may be adaptively used through signaling of information related to the linear model-based prediction mode.

According to the present disclosure, prediction performance may be improved by removing an artifact, etc. of a pre-reconstructed neighboring sample through preprocessing of a reference sample.

According to the present disclosure, prediction performance may be improved by selecting an optimal transform kernel for a residual signal derived by the linear model-based prediction mode.

[Brief Description of Drawings]

FIG. 1 shows a video/image coding system according to the present disclosure.
FIG. 2 shows a schematic block diagram of an encoding apparatus to which an embodiment of the present disclosure is applicable and encoding of video/image signals is performed.
FIG. 3 shows a schematic block diagram of a decoding apparatus to which an embodiment of the present disclosure is applicable and decoding of video/image signals is performed.
FIG. 4 illustrates an image decoding method performed by an image decoding apparatus, as an embodiment according to the present disclosure.
FIG. 5 illustrates a reference sample available for deriving a linear model parameter.
FIG. 6 illustrates a reference sample included in a second and third reference sample line, available for deriving a linear model parameter.
FIG. 7 illustrates a template region and/or a reference sample around the template region, available for deriving a linear model parameter.
FIG. 8 illustrates a schematic configuration of an image decoding apparatus that performs an image decoding method, as an embodiment according to the present disclosure.
FIG. 9 illustrates an image encoding method performed by an image encoding apparatus, as an embodiment according to the present disclosure.
FIG. 10 illustrates a schematic configuration of an image encoding apparatus that performs an image encoding method, as an embodiment according to the present disclosure.
FIG. 11 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

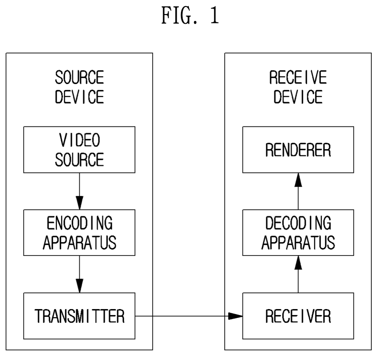

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

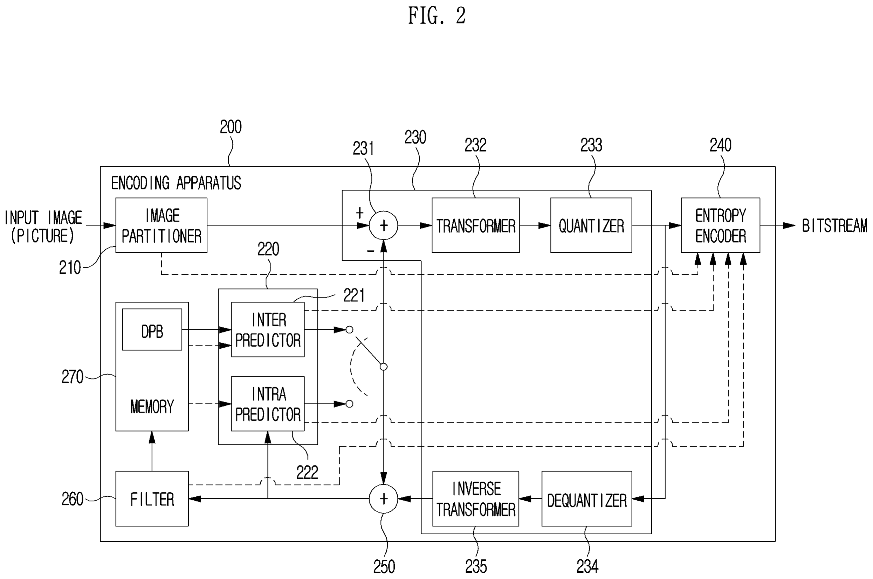

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc.

described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

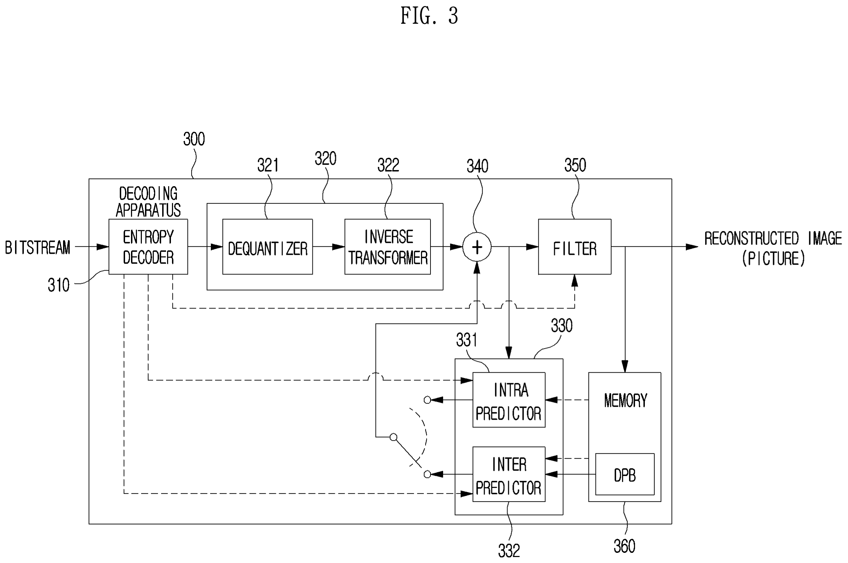

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

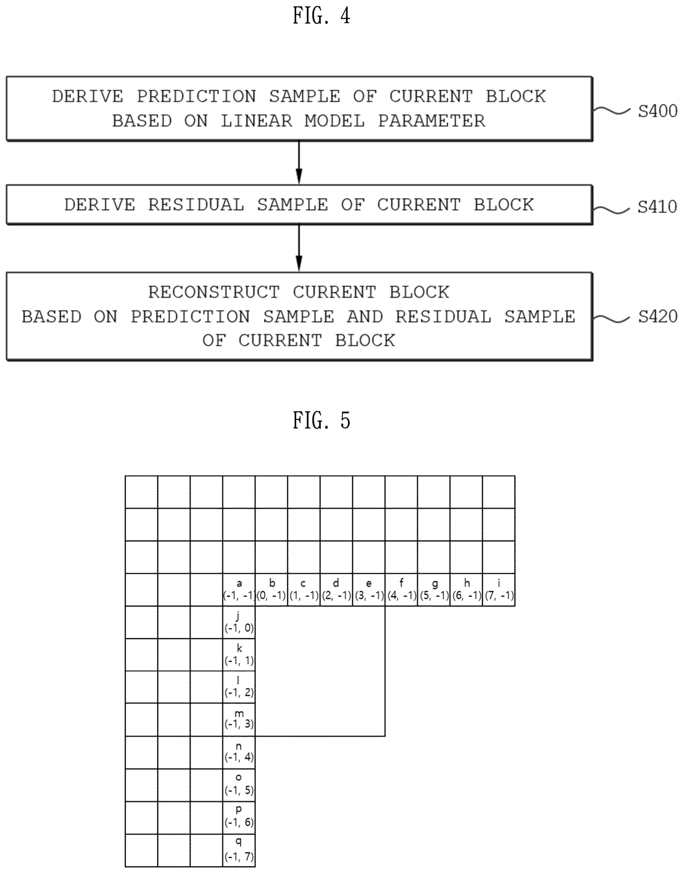

FIG. 4 illustrates an image decoding method performed by an image decoding apparatus, as an embodiment according to the present disclosure.

In the present disclosure, a method is proposed in which a linear model parameter is derived based on a value of a pre-reconstructed sample around a current block and/or coordinate information of the sample in order to construct an intra prediction block, and intra prediction is performed based on the linear model parameter.

Referring to FIG. 4, a prediction sample of a current block may be derived based on a linear model parameter S400.

The prediction sample of the current block may be derived based on at least one of coordinate information of the prediction sample, one or more pre-reconstructed samples around the current block, or a predetermined offset. Hereinafter, the pre-reconstructed samples around the current block may be referred to as a reference sample.

As an example, the prediction sample of the current block may be derived as shown in Equation 1.

[Equation 1]

$$P_{(x,y)} = a_0 x + a_1 y + \sum_{k=0}^{L-1} a_{k+2} Rec_k + a_{L+2}$$

In Equation 1, $P_{x,y}$ represents a value of a prediction sample at a position (x, y) in the current block, and x and y may respectively represent an x-axis coordinate and a y-axis coordinate within the current block. $a_0$ and $a_1$ may represent coefficients applied to the coordinates of the prediction sample, $a_2$ through $a_{L+1}$ may represent coefficients applied to the reference sample, and $a_{L+2}$ may represent an offset. The coefficient and the offset may be real numbers. $Rec_k$ may denote a set of reference sample values, and L may represent the number of reference samples used to derive the prediction sample.

A reference sample according to the present disclosure may be a pre-reconstructed sample corresponding to the coordinates of the prediction sample. For example, the reference sample may include at least one of a pre-reconstructed sample corresponding to the x-axis coordinate of the prediction sample or a pre-reconstructed sample corresponding to the y-axis coordinate of the prediction sample. A pre-reconstructed sample corresponding to the x-axis coordinate may include one or more samples with the same x-axis coordinate as the prediction sample. The pre-reconstructed sample corresponding to the x-axis coordinate may be included in at least one of the first reference sample line to the N-th reference sample line of the current block. Similarly, a pre-reconstructed sample corresponding to the y-axis coordinate may include one or more samples with the same y-axis coordinate as the prediction sample. The pre-reconstructed sample corresponding to the x-axis coordinate may be included in at least one of the first reference sample line to the N-th reference sample line of the current block. Here, N may be an integer greater than or equal to 2. The first reference sample line represents a reference sample line adjacent to the current block, and a second or higher reference sample line may represent a reference sample line which is not adjacent to the current block.

As described above, a prediction sample of the current block may be derived by applying a predetermined coefficient (or a weight) to coordinates of the prediction sample and a pre-reconstructed reference sample around the current block. Alternatively, the prediction sample of the current block may be derived by adding a predetermined offset to a value obtained by applying a predetermined coefficient (or a weight) to the coordinates of the prediction sample and the pre-reconstructed reference sample around the current block. A linear model parameter according to the present disclosure may include at least one of the above-described coefficient or offset.

As an example, Equation 1 may be expressed as shown in Equation 2.

[Equation 2]

$$P_{(x,y)} = a_0 x + a_1 y + a_2 Ref_{above} + a_3 Ref_{left} + a_4$$

In Equation 2, x and y may represent the coordinates of a prediction sample within the current block, where the x-axis and y-axis coordinates are defined based on the top-left sample within the current block with coordinates (0, 0). $Ref_{above}$ may represent an upper reference sample corresponding to the currently predicted sample (i.e., the prediction sample), and $Ref_{left}$ may represent a left reference sample corresponding to the prediction sample. In addition, $a_0$ and $a_1$ may represent a coefficient for the coordinates of the prediction sample, $a_2$ and $a_3$ may represent coefficients for the reference sample, and $a_4$ may represent an offset. In other words, Equation 2 may be defined as a model in which, a coefficient for other reconstructed sample is 0, except for the coefficients for the reconstructed sample and the coordinate of the first reference sample line corresponding to the (x, y) coordinate within the current block in Equation 1. Additionally, $a_4$ may be zero, in which case the proposed model may consist only of the coefficients $a_0$ through $a_3$.

Hereinafter, a method for deriving the linear model parameter may be described with reference to FIG. 5 to FIG. 7.

Embodiment 1

A linear model parameter may be derived based on a reference sample included in the first reference sample line of the current block.

FIG. 5 illustrates a reference sample available for deriving a linear model parameter. In FIG. 5, a through q represent values of reference samples included in the first reference sample line, and (x, y) represents the coordinate information of the corresponding reference sample. The coordinate information is defined based on the assumption that the top-left sample of the current block has coordinates (0, 0). In other words, the first reference sample line of the current block may consist of reference samples whose at least one of x-axis coordinate or y-axis coordinate is -1. The region where the value and coordinate information of the sample in Fig. 5 is not marked also be used to derive the coefficient and/or offset of Equation 2.

Assuming that a reference sample at a specific position is denoted as P(x, y) in Equation 2, and that a reference sample located above the specific position and a reference sample located to the left of the specific position are respectively denoted as $Ref_{above}$ and $Ref_{left}$ in Equation 2, these values may be substituted into Equation 2. In this case, when the reference sample at the specific position corresponds to a reference sample adjacent to the left of the current block, the reference sample located above the specific position may be either a reference sample adjacent to the top of the specific position or a reference sample at position (-1, -1). Alternatively, when the reference sample at the specific position corresponds to a reference sample adjacent to the top of the current block, the reference sample located to the left of the specific position may be either a reference sample adjacent to the left of the specific position or a reference sample at position (-1, -1).

When the linear model parameter is restricted to be derived using only reference samples included in the first reference sample line of the current block, the reference samples located in the upward or leftward direction may not be available. For example, when the reference sample at a specific position corresponds to a reference sample adjacent to the left of the current block, the reference sample located in the leftward direction may not be available. Alternatively, when the reference sample at the specific position corresponds to a reference sample adjacent to the top of the current block, the reference sample located in the upward direction may not be available. In such cases, the unavailable reference sample in the upward or leftward direction may be replaced with the reference sample at the specific position. Alternatively, the unavailable reference sample may be replaced with 0.

As an example, when the linear model parameter is restricted to be derived using only reference samples included in the first reference sample line of the current block, an equation as shown in Equation 3 may be derived by applying Equation 2 to a reference sample at position (-1, 0) as the specific position.

[Equation 3]

$$j = -a_0 + a_2 * a + a_3 * j + a_4$$

In the above-described manner, an equation similar to Equation 3 may be derived for each of all or a portion of the reference samples included in the first reference sample line of the current block. Here, a portion of the reference samples may refer to reference samples among those in the first reference sample line that are adjacent to at least one of the top or left of the current block. For example, equations similar to Equation 3 may be derived for reference samples adjacent to the current block (i.e., b, c, d, e, j, k, l or m), and in such a case, a matrix equation as shown in Equation 4 may be derived.

[Equation 4]

$$
\begin{bmatrix}
0 & -1 & b & a & 1 \\
1 & -1 & c & a & 1 \\
2 & -1 & d & a & 1 \\
3 & -1 & e & a & 1 \\
-1 & 0 & a & j & 1 \\
-1 & 1 & a & k & 1 \\
-1 & 2 & a & l & 1 \\
-1 & 3 & a & m & 1
\end{bmatrix}
\begin{bmatrix}
a_0 \\ a_1 \\ a_2 \\ a_3 \\ a_4
\end{bmatrix}
=
\begin{bmatrix}
b \\ c \\ d \\ e \\ j \\ k \\ l \\ m
\end{bmatrix}
$$

Equation 4 has the form of AX = B, and a linear model parameter for the current block may be calculated based on various methods for solving a linear equation (e.g., Gaussian elimination, LDL decomposition, LU decomposition, Cholesky decomposition, etc.).

Alternatively, a linear model parameter may be derived based on reference samples included in a second and third reference sample line of the current block.

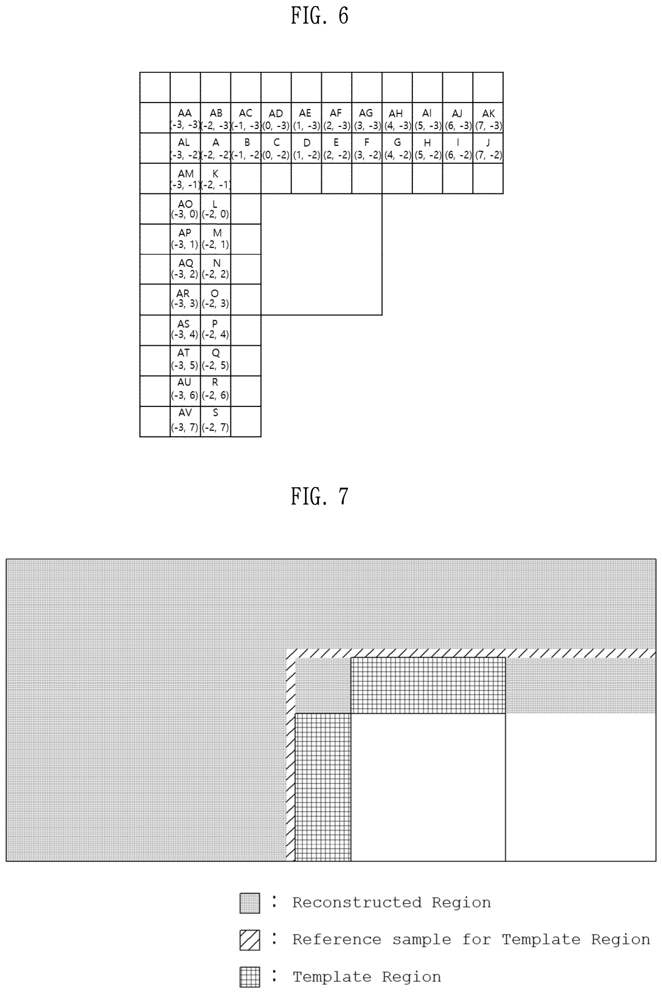

FIG. 6 illustrates reference samples included in the second and third reference sample lines, which are available for deriving a linear model parameter. In FIG. 6, A through S represent values of reference samples included in the second reference sample line, AA through AV represent values of reference samples included in the third reference sample line, and (x, y) represents coordinate information of the corresponding reference sample. The coordinate information is defined based on the assumption that the coordinate information of top-left sample within the current block is (0, 0). In other words, the second reference sample line of the current block may consist of reference samples whose at least one of x-axis coordinate or y-axis coordinate is -2. The third reference sample line of the current block may consist of reference samples whose at least one of x-axis coordinate or y-axis coordinate is -3.

Assuming that a reference sample included in the second reference sample line is denoted as $P_{(x, y)}$ in Equation 2, and that a reference sample located above and a reference sample located to the left of it are respectively denoted as $Ref_{above}$ and $Ref_{left}$ in Equation 2, these values may be substituted into Equation 2. The reference samples located in the upward and leftward directions may be included in the third reference sample line. The reference sample located in the upward direction may have the same x-axis coordinate as the reference sample included in the second reference sample line. The reference sample located in the leftward direction may have the same y-axis coordinate as the reference sample included in the second reference sample line.

By applying Equation 2 to each or a portion of the reference samples included in the second reference sample line of the current block, equations similar to Equation 3 may be derived for each reference sample. Here, a portion of the reference samples may refer to reference samples among those in the second reference sample line that are located in at least one of the top or left directions of the current block. Based on the derived equations, a matrix equation similar to Equation 4 may be derived, and the linear model parameter may be calculated using various methods for solving a linear equation.

Alternatively, a linear model parameter may be derived based on a reference sample included in a template region of the current block.

FIG. 7 illustrates a template region and/or reference samples around the template region that are available for deriving a linear model parameter. The template region according to the present disclosure may be a neighboring region adjacent to the current block, and may include at least one of a left template region or an upper template region. Assuming that a reference sample included in the template region is denoted as $P_{(x, y)}$ in Equation 2, and that reference samples around the template region are denoted as $Ref_{above}$ and/or $Ref_{left}$ in Equation 2, these values may be substituted into Equation 2. The reference sample around the template region may be a sample located in at least one of the upward or leftward directions from the reference sample included in the template region. In this case, the sample in the upward direction may have the same x-axis coordinate as the reference sample included in the template region, and the sample in the leftward direction may have the same y-axis coordinate as the reference sample included in the template region.

By applying Equation 2 to all or a portion of the reference samples included in the template region of the current block, an equation similar to Equation 3 may be derived for each reference sample. Based on the derived equation, a matrix equation similar to Equation 4 may be derived, and the linear model parameter may be calculated using various methods for solving a linear equation.

The template region according to the present disclosure may be divided into a plurality of sub-regions. The plurality of sub-regions may include at least two of a left template region, an upper template region, an upper-left template region, an upper-right template region, or a lower-left template region. The linear model parameter described above may be calculated based on a portion of the plurality of sub-regions. The portion of sub-regions may refer to any one of the above-described sub-regions, or may be defined as a combination of at least two of the above-described sub-regions. Alternatively, a linear model parameter may be calculated for each of the plurality of sub-blocks. As an example, a linear model parameter based on the upper template region and a linear model parameter based on the left template region may be respectively calculated.

When a plurality of linear model parameters are calculated for the current block, a prediction sample may be derived based on each linear model parameter, and a final prediction sample may be derived based on a weighted sum of the derived prediction samples. Alternatively, one of the plurality of linear model parameters may be selected, and a prediction sample may be derived based on the selected linear model parameter. To this end, an index specifying one of the plurality of linear model parameters may be signaled.

When solving the above-described linear equation, floating-point operation may be required. In such cases, in order to avoid floating-point operation, a method of scaling up the matrix values by a specific factor during the intermediate steps and then scaling down to the original scale when generating the final prediction sample may be used. Through this method, the computational complexity caused by floating-point operation may be reduced. As an example, the scaling-up unit may be $2^{22}$.

The intra prediction model proposed in the present disclosure may perform prediction in consideration of linear variation along the x-axis and y-axis within the current block, and by considering the reference sample corresponding to the position of the prediction sample, may reflect both overall variation and local variation of the block. The proposed method may improve prediction performance by generating a new prediction value different from the characteristics of a conventional intra prediction block.

Embodiment 2

A formula that expresses a correlation between the value of a reference sample included in the first reference sample line of the current block and the coordinates of the reference sample may be used to assume an equation that minimizes error as described below. Here, the reference sample included in the first reference sample line is as shown with reference to FIG. 5.

[Equation 5]

$$MSE = \frac{1}{L}\sum_{i=1}^{L}(Pred - Rec)^2$$

In Equation 5, L may represent the number of reference samples. In addition, Pred may represent a prediction sample, and Rec may represent a reference sample, respectively. Since the minimum value of the squared error is 0, partial derivatives with respect to $a_0$ through $a_4$ are taken for the above equation, resulting in Equation 6 below. The Pred in the equation below may be replaced with Equation 2 described above.

[Equation 6]

$$\frac{\partial}{\partial a_0}\sum(Pred-Rec)^2 = \sum(x^2 a_0 + xy a_1 + Ref_x^{above}a_2 + xRef_y^{left}a_3 + xa_4) - \sum xRec$$

$$\frac{\partial}{\partial a_1}\sum(Pred-Rec)^2 = \sum(xy a_0 + y^2 a_1 + yRef_x^{above}a_2 + yRef_x^{above}Ref_y^{left}a_3 + ya_4) - \sum yRec$$

$$\frac{\partial}{\partial a_2}\sum(Pred-Rec)^2$$
$$= \sum\left(xRef_x^{above}a_0 + yRef_y^{left}a_1 + \left(Ref_x^{above}\right)^2 a_2 + yRef_y^{left}a_3 + Ref_x^{above}a_4\right) - \sum Ref_x^{above}Rec$$

$$\frac{\partial}{\partial a_3}\sum(Pred-Rec)^2 = \sum(xRef_y^{left}a_0 + yRef_y^{left}a_1 + Ref_x^{above}Ref_y^{left}a_2 + \left(Ref_y^{left}\right)^2 a_3 + Ref_y^{left}) - \sum Ref_y^{left}Rec$$

$$\frac{\partial}{\partial a_4}\sum(Pred-Rec)^2 = \sum\left(xa_0 + ya_1 + Ref_x^{above}a_2 + Ref_y^{left}a_3 + a_4\right) - \sum Rec$$

Equation 6 above, when expressed as a matrix with respect to $a_0$ through $a_4$, results in Equation 7 shown below.

[Equation 7]

$$\begin{bmatrix} \sum x^2 & \sum xy & \sum xRef_x^{above} & \sum xRef_y^{left} & \sum x \\ \sum xy & \sum y^2 & \sum yRef_x^{above} & \sum yRef_y^{left} & \sum y \\ \sum xRef_x^{above} & yRef_x^{above} & \sum(Ref_x^{above})^2 & \sum Ref_x^{above}Ref_y^{left} & \sum Ref_x^{above} \\ \sum xRef_y^{left} & yRef_y^{left} & \sum Ref_x^{above}Ref_y^{left} & \sum(Ref_y^{left})^2 & \sum Ref_y^{left} \\ \sum x & \sum y & \sum Ref_x^{above} & \sum Ref_y^{left} & L \end{bmatrix} \begin{bmatrix} a_0 \\ a_1 \\ a_2 \\ a_3 \\ a_4 \end{bmatrix} = \begin{bmatrix} \sum xRec \\ \sum yRec \\ \sum Ref_x^{above}Rec \\ \sum Ref_y^{left}Rec \\ \sum Rec \end{bmatrix}$$

Equation 7 has the form of AX = B, and the solutions for $a_0$ through $a_4$ may be calculated using Cramer's rule as shown in Equation 8.

[Equation 8]

$$a_0 = \frac{det(B_0)}{det(A)},$$
$$a_1 = \frac{det(B_1)}{det(A)},$$
$$a_2 = \frac{det(B_2)}{det(A)},$$
$$a_3 = \frac{det(B_3)}{det(A)},$$
$$a_4 = \frac{det(B_4)}{det(A)}$$

In Equation 8, $B_i$ (i = 0, 1, 2, 3 or 4) is a matrix in which the i-th column of matrix A is replaced with B. Based on the equations above, the linear model parameter may be calculated.

Alternatively, a matrix equation similar to Equation 7 may be derived based on a reference sample included in the second and third reference sample lines, as described with reference to FIG. 6, and the linear model parameter may be calculated based on this matrix equation.

Alternatively, a matrix equation similar to Equation 7 may be derived based on a reference sample included in the template region and/or a reference sample around the template region, as described with reference to FIG. 7, and the linear model parameter may be calculated based on this matrix equation.

The template region according to the present disclosure may be divided into a plurality of sub-regions. The plurality of sub-regions may include at least two of a left template region, an upper template region, an upper-left template region, an upper-right template region, or a lower-left template region. The linear model parameter described above may be calculated based on a portion of the plurality of sub-regions. The portion of the sub-regions may refer to any one of the above-described sub-regions or may be defined as a combination of at least two of the above-described sub-regions. Alternatively, a linear model parameter may be calculated for each of the plurality of sub-blocks. As an example, a linear model parameter based on the upper template region and a linear model parameter based on the left template region may be respectively calculated.

When a plurality of linear model parameters are calculated for the current block, a prediction sample may be derived based on each linear model parameter, and a final prediction sample may be derived based on a weighted sum of the derived prediction samples. Alternatively, one of the plurality of linear model parameters may be selected, and a prediction sample may be derived based on the selected linear model parameter. To this end, an index specifying one of the plurality of linear model parameters may be signaled.

When solving the above-described linear equation, floating-point operation may be required. In such cases, to avoid floating-point operation, a method of scaling up the matrix values by a specific factor during the intermediate steps and scaling them down to the original scale when generating the final prediction sample may be used. Through this method, the computational complexity caused by floating-point operation may be reduced. As an example, the scaling-up factor may be $2^{22}$.

The intra prediction model proposed in the present disclosure may perform prediction in consideration of linear variation along the x-axis and y-axis within the current block, and by considering the reference sample corresponding to the position of the prediction sample, may reflect both overall variation and local variation of the block. The proposed method may improve prediction performance by generating a new prediction value different from the characteristics of a conventional intra prediction block.

Embodiment 3

A prediction sample of the current block may be derived by applying a predetermined coefficient (or a weight) to the coordinate of the prediction sample. Alternatively, the prediction sample of the current block may be derived by adding a predetermined offset to a value obtained by applying a predetermined coefficient (or a weight) to the coordinate of the prediction sample and a pre-reconstructed reference sample around the current block. The linear model parameter according to the present disclosure may include at least one of the above-described coefficient or offset.

As an example, a value of the prediction sample at position (x, y) within the current block may be derived as shown in Equation 9.

[Equation 9]

$$P_{(x,y)} = a_0 x + a_1 y + a_2$$

In Equation 9, x and y represent the coordinates of the prediction sample within the current block, and may respectively indicate the x-axis coordinate and y-axis coordinate when the coordinate of the top-left sample in the current block is defined as (0, 0). $a_0$ and $a_1$ represent coefficients for the coordinates of the prediction sample, and $a_2$ may represent an offset. In addition, $a_2$ may be 0, and in such a case, the proposed model may be composed of only the coefficients of $a_0$ and $a_1$.

The linear model parameter may be derived based on the value of the reference sample of the current block and coordinate information corresponding to the reference sample.

Specifically, the linear model parameter may be derived based on the reference sample included in the first reference sample line of the current block, as described with reference to FIG. 5.

A reference sample at a specific position is assumed to be $P_{(x, y)}$ in Equation 9. In this case, the value of the reference sample at the specific position and coordinate information of the specific position may be substituted into Equation 9. For example, when Equation 9 is applied based on a reference sample at specific position (-1, 1), an equation as shown in Equation 10 may be derived.

[Equation 10]

$$k = -a_0 + a_1 + a_2$$

By the above-described method, for all or part of the reference samples included in the first reference sample line of the current block, an equation such as Equation 10 may be derived for each reference sample. Here, part of the reference samples may refer to a reference sample, among the reference samples included in the first reference sample line, which is adjacent to at least one of an upper side or a left side of the current block. For example, equations such as Equation 10 may be derived for the reference sample adjacent to the current block (i.e., b, c, d, e, j, k, l or m), and in this case, a matrix equation such as Equation 11 may be derived.

[Equation 11]

$$\begin{bmatrix} 0 & -1 & 1 \\ 1 & -1 & 1 \\ 2 & -1 & 1 \\ 3 & -1 & 1 \\ -1 & 0 & 1 \\ -1 & 1 & 1 \\ -1 & 2 & 1 \\ -1 & 3 & 1 \end{bmatrix} \begin{bmatrix} a_0 \\ a_1 \\ a_2 \end{bmatrix} = \begin{bmatrix} b \\ c \\ d \\ e \\ j \\ k \\ l \\ m \end{bmatrix}$$

Equation 11 may be represented in the form of AX = B, and linear model parameter for the current block may be derived based on various methods for solving a linear equation (i.e., Gaussian elimination, LDL decomposition, LU decomposition, Cholesky decomposition, etc.).

Alternatively, a matrix equation identical/similar to Equation 11 may be derived based on a reference sample included in the second and/or third reference sample line of the current block, as described with reference to FIG. 6, and a linear model parameter may be derived based thereon.

Alternatively, a matrix equation identical/similar to Equation 11 may be derived based on a reference sample included in the template region and/or a reference sample around the template region, as described with reference to FIG. 7, and a linear model parameter may be derived based thereon. Here, the template region may be divided into a plurality of sub-regions. The plurality of sub-regions may include at least two of a left template region, an above template region, an upper-left template region, an upper-right template region, or a lower-left template region. The linear model parameter described above may be derived based on some of the plurality of sub-regions. The some of the sub-regions may refer to any one of the sub-regions described above or may be defined as a combination of at least two of the sub-regions described above. Alternatively, a linear model parameter may be derived for each of a plurality of sub-blocks. As an example, a linear model parameter based on the above template region and a linear model parameter based on the left template region may be respectively derived.

When a plurality of linear model parameters are derived for the current block, a prediction sample may be derived based on each linear model parameter, and a final prediction sample may be derived based on a weighted sum of the derived prediction samples. Alternatively, one of the plurality of linear model parameters may be selected, and a prediction sample may be derived based on the selected linear model parameter. To this end, an index for specifying one of the plurality of linear model parameters may be signaled.

When solving the above-described linear equation, floating point operation may be required. In such cases, to avoid floating point operation, a method may be used in which the values of the matrix are scaled up by a specific factor during an intermediate step, and then scaled down to the original scale when generating the final prediction sample. Through this method, the computational complexity caused by floating point operation may be reduced. As an example, the scale-up factor may be $2^{22}$.

The intra prediction model proposed in the present disclosure may perform prediction by considering linear variation along the x-axis and y-axis within a current block. Unlike the planar mode that reflects linear variation using reference samples adjacent to the top/left of the current block and a corner reference sample, the proposed prediction model may reflect local linear variation. The proposed method may improve prediction performance by generating a new prediction value that differs from the characteristics of a conventional intra prediction block.

The present disclosure proposes a method of signaling the intra prediction method based on an above-described linear model parameter (hereinafter referred to as the linear model-based prediction mode). One or more syntax elements related to the linear model-based prediction mode may be encoded and signaled.

As an example, in an encoding apparatus and a decoding apparatus, one of embodiments 1 to 3 described above may be defined as the linear model-based prediction mode. In this case, the syntax element related to the linear model-based prediction mode may be signaled as shown in Table 1 below.

[Table 1]

| coding_unit( x0, y0, cbWidth, cbHeight, cqtDepth, treeType, modeType ) { | Descriptor |
|---|---|
| ... | |
| if( sps_embodimentX _enabled _flag ) | |

(continued)

| embodimentX_flag | ae(v) |
|---|---|
|   else | |
| ... | |
| } | |

A first flag indicating whether the linear model-based prediction mode is available may be signaled. The first flag may be signaled at a higher level than the block level. Here, the higher level may refer to at least one of a Video Parameter Set (VPS), a Sequence Parameter Set (SPS), a Picture Parameter Set (PPS), an Adaptive Parameter Set (APS), a Picture Header (PH), or a Slice Header (SH). As an example, the first flag may be represented as sps_embodimentX _enabled_ flag signaled at the SPS level.

When the first flag indicates that the linear model-based prediction mode is available, a second flag indicating whether the linear model-based prediction mode is applied may be signaled. The second flag may be signaled at the block level, such as in a Coding Tree Unit (CTU) or a Coding Unit (CU). For example, the second flag may be represented as embodimentX flag signaled in the coding unit syntax. When the second flag is 1, the linear model-based prediction mode may be applied to the current block, and when the second flag is 0, the linear model-based prediction mode may not be applied to the current block.

When the first flag indicates that the linear model-based prediction mode is not available, the second flag indicating whether the linear model-based prediction mode is applied may not be signaled, and the value of the second flag may be derived as 0.

Alternatively, although Embodiments 1 and 2 differ in the method of deriving a linear model parameter, they may be regarded as the same prediction method in theory since the formulas for deriving a prediction sample are identical. In contrast, Embodiment 3 uses a different formula for deriving a prediction sample compared to Embodiments 1 and 2, and thus may be theoretically considered a different prediction method. Accordingly, a plurality of linear model-based prediction modes may be defined in the encoding apparatus and the decoding apparatus, and one of them may be selectively used. The plurality of linear model-based prediction modes may include the linear model-based prediction mode according to either one of Embodiment 1 or 2 described above, and the linear model-based prediction mode according to Embodiment 3. In the encoding apparatus, a linear model-based prediction mode with the optimal cost in terms of rate-distortion may be selected, and in the decoding apparatus, prediction may be performed based on the optimal linear model-based prediction mode selected by the encoding apparatus. In this case, a syntax element related to the linear model-based prediction mode may be signaled as shown in Table 2 below.

[Table 2]

| coding _unit( x0, y0, cbWidth, cbHeight, cqtDepth, treeType, modeType ) { | Descriptor |
|---|---|
| ... | |
| if( sps_embodimentX_enabled_flag ) | |
| **embodimentX_flag** | ae(v) |
| else if (sps_embodimentY_enabled_flag) | |
| **embodimentY_flag** | ae(v) |
| else | |
| ... | |
| } | |

A first flag indicating whether a first linear model-based prediction mode is available may be signaled. The first flag may be signaled at a higher level than the block level. Here, the higher level may refer to at least one of a Video Parameter Set (VPS), a Sequence Parameter Set (SPS), a Picture Parameter Set (PPS), an Adaptive Parameter Set (APS), a Picture Header (PH), or a Slice Header (SH). For example, the first flag may be represented as sps_embodimentX_enabled_ flag signaled at the SPS level. The first linear model-based prediction mode may refer to the linear model-based prediction mode according to either Embodiment 1 or 2 described above.

When the first flag indicates that the first linear model-based prediction mode is available, a second flag indicating whether the first linear model-based prediction mode is applied may be signaled. The second flag may be signaled at the block level, such as in a Coding Tree Unit (CTU) or a Coding Unit (CU). For example, the second flag may be represented as embodimentX_flag signaled in the coding unit syntax. When the second flag is 1, the first linear model-based prediction mode may be applied to the current block, and when the second flag is 0, the first linear model-based prediction mode may not be applied to the current block.

When the first flag indicates that the first linear model-based prediction mode is not available, the second flag indicating whether the first linear model-based prediction mode is applied may not be signaled, and the value of the second flag may be derived as 0.

Additionally, a third flag indicating whether a second linear model-based prediction mode is available may be signaled. The third flag may be signaled at a higher level than the block level. Here, the higher level may refer to at least one of a Video Parameter Set (VPS), a Sequence Parameter Set (SPS), a Picture Parameter Set (PPS), an Adaptive Parameter Set (APS), a Picture Header (PH), or a Slice Header (SH). For example, the third flag may be represented as sps_embodimentY_enabled_flag signaled at the SPS level. The second linear model-based prediction mode may refer to the linear model-based prediction mode according to Embodiment 3 described above.

When the third flag indicates that the second linear model-based prediction mode is available, a fourth flag indicating whether the second linear model-based prediction mode is applied may be signaled. The fourth flag may be signaled at the block level, such as in a Coding Tree Unit (CTU) or a Coding Unit (CU). For example, the fourth flag may be represented as embodimentY_flag signaled in the coding unit syntax. When the fourth flag is 1, the second linear model-based prediction mode may be applied to the current block, and when the fourth flag is 0, the second linear model-based prediction mode may not be applied to the current block. The fourth flag may be signaled when the first flag described above indicates that the first linear model-based prediction mode is not available.

When the third flag indicates that the second linear model-based prediction mode is not available, the fourth flag indicating whether the second linear model-based prediction mode is applied may not be signaled, and the value of the fourth flag may be derived as 0.

Alternatively, a plurality of linear model-based prediction modes may be defined in the encoding apparatus and the decoding apparatus, and one of them may be selectively used. The plurality of linear model-based prediction modes may include the linear model-based prediction modes according to Embodiments 1 to 3 described above. In the encoding apparatus, a linear model-based prediction mode with the optimal cost in terms of rate-distortion may be selected, and in the decoding apparatus, prediction may be performed based on the optimal linear model-based prediction mode selected by the encoding apparatus. In this case, a syntax element related to the linear model-based prediction mode may be signaled as shown in Table 3.

[Table 3]

| coding_unit( x0, y0, cbWidth, cbHeight, cqtDepth, treeType, modeType ) { | Descriptor |
|---|---|
| ... | |
| if( sps_model_based_intar_prediction_flag ) | |
| **use_embodimentX_flag** | ae(v) |
| if (use embodimentX flag) | |
| **which_embodiment_idx** | ae(v) |
| else | |
| ... | |
| } | |

A first flag indicating whether a linear model-based prediction mode is available may be signaled. The first flag may be signaled at a higher level than a block level. Here, the higher level may include at least one of a Video Parameter Set (VPS), a Sequence Parameter Set (SPS), a Picture Parameter Set (PPS), an Adaptation Parameter Set (APS), a Picture Header (PH), or a Slice Header (SH). For example, the first flag may be represented as sps_model_based_intar_prediction flag signaled at the SPS level.

When the first flag indicates that the linear model-based prediction mode is available, a second flag indicating whether the linear model-based prediction mode is applied may be signaled. The second flag may be signaled at a block level, such as in a Coding Tree Unit (CTU) or a Coding Unit (CU). For example, the second flag may be represented as use_embodimentX_flag signaled in the coding unit syntax. When the second flag is 1, the linear model-based prediction mode may be applied to the current block, and when the second flag is 0, the linear model-based prediction mode may not be applied to the current block.

When the first flag indicates that the linear model-based prediction mode is not available, the second flag indicating whether the linear model-based prediction mode is applied may not be signaled, and the value of the second flag may be derived as 0.

When the second flag indicates that the linear model-based prediction mode is applied, an index (which embodiment_idx) specifying one of the plurality of linear model-based prediction modes may be signaled. For example, when the index is 0, the linear model-based prediction mode according to Embodiment 1 may be used. When the index is 1, the linear model-based prediction mode according to Embodiment 2 may be used. When the index is 2, the linear model-based prediction mode according to Embodiment 3 may be used.

Meanwhile, one or more linear model parameters may be derived based on reference samples of the current block.

In a current block with a predetermined width and height, a value of a prediction sample at position $(x, y)$ may be derived as in Equation 2. When the coordinate of the top-left sample of the current block is defined as $(0, 0)$, $x$ and $y$ may respectively represent x-axis coordinate and y-axis coordinate within the current block. $x$ may be greater than or equal to 0 and less than the width of the current block. $y$ may be greater than or equal to 0 and less than the height of the current block. $Ref_{above}$ may represent a top reference sample corresponding to the current prediction sample, and $Ref_{Left}$ may represent a left reference sample corresponding to the current prediction sample. In addition, $a_0$ and $a_1$ may represent coefficients for the coordinate of the current prediction sample, $a_2$ and $a_3$ may represent coefficient for the top/left reference sample, and $a_4$ may represent an offset. Here, $a_4$ may be 0, and in such a case, the proposed linear model parameter may consist of only the coefficients $a_0$ to $a_3$. In other words, the linear model parameter according to the present disclosure may include at least one of the coefficient or the offset.

Among pre-reconstructed samples around the current block, a relational expression between reference sample(s) with at least one of an x-axis coordinate or a y-axis coordinate being -N and reference sample(s) with at least one of an x-axis coordinate or a y-axis coordinate being -M may be defined as in Equation 2, and based on this, one or more linear model parameters may be derived.

Here, a group of one or more reference samples with at least one of an x-axis coordinate or a y-axis coordinate being -N is referred to as a first reference sample line. The coordinate of a reference sample included in the first reference sample line may be represented as $(x_{ref}, -N)$ or $(-N, y_{ref})$. A group of one or more reference samples with at least one of an x-axis coordinate or a y-axis coordinate being -M is referred to as a second reference sample line. The coordinate of a reference sample included in the second reference sample line may be represented as $(x_{ref}, -M)$ or $(-M, y_{ref})$. Here, N and M are integers greater than or equal to 0, and $x_{ref}$ and $y_{ref}$ may represent the coordinate of a referenceable sample among the pre-reconstructed samples around the current block. For example, $x_{ref}$ may be greater than or equal to -M and less than $(2*width)$, and $y_{ref}$ may be greater than or equal to -M and less than $(2*height)$.

A value of a reference sample included in the first reference sample line may be input as $P_{(x, y)}$ in Equation 2, and a top reference sample and/or a left reference sample corresponding to the reference sample may be respectively input as $Ref_{above}$ and/or $Ref_{Left}$ in Equation 2. Here, the top/left reference sample may be included in the second reference sample line. In this way, a relational expression between the first reference sample line and the second reference sample line may be defined based on Equation 2. The relational expression may be derived for each of at least two reference samples included in the first reference sample line, and based on the derived relational expressions, a linear model parameter may be derived. This corresponds to what has been described in Embodiment 1 above.

Based on the range of the value M, a plurality of second reference sample lines may be defined. In this case, based on the method described above, a linear model parameter may be derived for each second reference sample line corresponding to each value of M.

For example, the first reference sample line may be a group of reference samples with at least one of an x-axis coordinate or a y-axis coordinate being -1. The coordinate of the reference sample included in the first reference sample line may be expressed as $(x_{ref}, -1)$ or $(-1, y_{ref})$. Based on the reference samples of the first reference sample line, a linear model parameter may be derived for each of at least two second reference sample lines. Here, the at least two second reference sample lines may correspond to the second reference sample lines where M is at least two of 1, 2, 3, or 4.

Alternatively, the first reference sample line may be a group of reference samples with at least one of an x-axis coordinate or a y-axis coordinate being -4. The coordinate of the reference sample included in the first reference sample line may be expressed as $(x_{ref}, -4)$ or $(-4, y_{ref})$. Based on the reference samples of the first reference sample line, a linear model parameter may be derived for each of the second reference sample lines where M is at least two of 1, 2, 3, or 4.

One or more linear model parameters may be derived based on reference samples included in a neighboring region (or a specific region within the neighboring region) of the current block. Here, the neighboring region may include at least one of a left neighboring region, an upper neighboring region, an upper-left neighboring region, an upper-right neighboring region, or a lower-left neighboring region of the current block. The specific region within the neighboring region may be defined as a block with a predetermined width and height. For example, the specific region may be defined as a 4x4 block. Alternatively, the specific region may be variably determined based on the size of the current block. A linear model parameter may be derived for each neighboring region (or each specific region within the neighboring region) of the current block.

As described above, a plurality of linear model parameters may be derived for the current block. In this case, information for specifying one of the plurality of linear model parameters may be explicitly signaled. Alternatively, instead of explicitly signaling the information, the optimal linear model parameter may be selected from among the plurality of linear model parameters based on a predefined method in the encoder and decoder. For example, a plurality of linear model parameters may be applied respectively to a neighboring region (or template region) of the current block. Based on each linear model parameter, a prediction sample of the corresponding neighboring region may be derived, and a difference (e.g., SAD) between the prediction sample and the reconstructed sample of the corresponding neighboring region may be calculated. Among the differences calculated for each linear model parameter, the linear model parameter corresponding to the smallest difference may be selected as the optimal linear model parameter.

Information for specifying one of the plurality of linear model parameters may be signaled as shown in Table 4 below.

[Table 4]

| coding_unit( x0, y0, cbWidth, cbHeight, cqtDepth, treeType, modeType ) { | Descriptor |
|---|---|
| ... | |
| if( sps_model_based_intra_prediction_flag ) | |
| **use_model_pred_flag** | ae(v) |
| if (use model_pred flag) | |
| **model_idx** | ae(v) |
| else | |
| ... | |
| } | |

Referring to Table 4, a first flag (sps_model_based_intra_prediction_flag) indicating whether the linear model-based prediction mode according to the present disclosure is available may be signaled. The first flag may indicate whether the linear model-based prediction mode is defined in the encoding/decoding apparatus. The first flag may also indicate whether the linear model-based prediction mode is available at a higher level referenced by the current block. The first flag may be signaled at a higher level than a block level. Here, the higher level may include at least one of a VPS, SPS, PPS, APS, PH, or SH.

When the first flag indicates that the linear model-based prediction mode is available, a second flag (use_model_pred_flag) indicating whether the linear model-based prediction mode is used for the current block may be signaled. For example, when the second flag is 1, the linear model-based prediction mode may be applied to the current block, and when the second flag is 0, the linear model-based prediction mode may not be applied to the current block. When the first flag indicates that the linear model-based prediction mode is not available, the second flag may not be signaled, and the value of the second flag may be derived as 0.

When the second flag indicates that the linear model-based prediction mode is used for the current block, an index (model_idx) specifying one of the plurality of linear model parameters may be signaled. Based on the index, one of the plurality of linear model parameters may be selected.

The second flag and the index may be signaled at the block level. Here, the block level may include at least one of a coding tree unit, a coding unit, or a transform unit.

Alternatively, the first flag may not be signaled, and at the block level, at least one of the above-described second flag or index may be signaled.

The intra prediction model proposed in the present disclosure may perform prediction by considering the linear variation in the x-axis and y-axis within the current block, and may reflect both the overall variation and local variation of the block by considering the reference sample corresponding to the position of the prediction sample. Additionally, a plurality of linear model parameters may be derived based on the pre-reconstructed samples around the current block, and one of them may be selected as the optimal linear model parameter. The proposed method may improve prediction performance by constructing a new prediction different from the characteristics of the conventional intra prediction block.

A predetermined pre-processing filter may be applied to the reference sample according to the present disclosure, and a linear model parameter may be derived based on the filtered reference sample. High-frequency components may be removed through low-pass filtering for the reference sample.

For example, a Gaussian filter may be applied to the reference sample, and the linear model parameter may be derived based on the filtered reference sample. The Gaussian filter may be a 1-dimensional 3-tap filter, and the filter coefficients may be [1/4, 1/2, 1/4]. To avoid division operation, the filter coefficient may be scaled up by 4 and a shift operation may be applied when calculating the final filtered sample value. Alternatively, the Gaussian filter may be a 1-dimensional 5-tap filter, and the filter coefficients may be [1/16, 4/16, 6/16, 4/16, 1/16].

At least one of whether to filter the reference sample or the filter type may be determined based on the size of the current block. For example, when the width and height of the current block are greater than or equal to 8, the pre-processing filter may be applied to the reference sample. The pre-processing filter may be applied to the reference sample regardless of the size of the current block. When the width and/or height of the current block is less than 32, the 3-tap filter may be applied, and otherwise, the 5-tap filter may be applied. When the width and/or height of the current block is less than 8, a Cubic filter may be used, and otherwise, a Gaussian filter may be used.

Alternatively, whether to filter the reference sample may be the same as the pre-processing condition for the reference sample in a specific intra prediction mode. For example, the specific intra prediction mode may be the planar mode.

The reference sample pre-processing method according to the present disclosure may improve prediction performance by removing an artifact, etc. of the pre-reconstructed neighboring sample used in prediction.

The linear model-based prediction mode according to the present disclosure may be defined as a separate intra prediction mode. For example, assuming that the non-directional modes, planar mode and DC mode, are respectively defined as mode 0 and mode 1, and the directional modes are defined as modes 2 through 66. In this case, the linear model-based prediction mode may be defined as mode 67.

Alternatively, one of the conventional non-directional modes may be replaced with the linear model-based prediction mode. For example, the linear model-based prediction mode may be defined as mode 0 instead of the conventional planar mode. Alternatively, the linear model-based prediction mode may be defined as mode 1 instead of the conventional DC mode.

In order to derive an intra prediction mode of the current block, an MPM list including multiple candidate modes (MPM) may be configured. The multiple candidate modes may be derived based on the intra prediction mode of the neighboring block adjacent to the current block. When the neighboring block is a block encoded based on the linear model-based prediction mode, the linear model-based prediction mode may be added to the MPM list as a candidate mode of the current block. However, when there is a coexistence of a method of signaling a flag indicating whether the linear model-based prediction mode is used and a method of considering a linear model-based prediction mode, there may be a case where the linear model-based prediction mode is selected from the MPM list even when the flag indicates that the linear model-based prediction mode is not used for the current block. In this case, ambiguity may be caused in terms of Bitstream conformance, therefore, when the linear model-based prediction mode is considered as a candidate mode, explicit signaling of the flag may be excluded.

Alternatively, the linear model-based prediction mode may be defined as a unique prediction mode, like the matrix-based intra prediction method (MIP), decoder-side intra mode derivation method (DIMD), etc. When a neighboring block referenced for MPM list construction is a block encoded based on the linear model-based prediction mode, the intra prediction mode of the neighboring block may be replaced with a pre-defined intra prediction mode and added to the MPM list. Here, the pre-defined intra prediction mode may be a planar mode or a DC mode. This method may simplify the process for removing duplicate modes (Pruning process) during MPM list construction and thereby may reduce complexity.

The linear model-based prediction mode according to the present disclosure may be selectively applied based on the component type of the current block. For example, the linear model-based prediction mode may be applied when the component type of the current block is a luma component, and may not be applied when the component type is a chroma component. The intra prediction mode for the chroma component of the current block may be derived based on intra prediction mode information for the chroma component and the intra prediction mode for the luma component of the current block. For example, when the intra prediction mode information for the chroma component indicates a DM mode, the intra prediction mode for the chroma component may be derived as the intra prediction mode for the luma component. In this case, when the intra prediction mode for the luma component corresponds to the linear model-based prediction mode, the intra prediction mode for the chroma component may be derived as a pre-defined different mode. Here, the pre-defined different mode may be a planar mode or a DC mode.

The linear model-based prediction mode according to the present disclosure may be adaptively applied based on the size of the current block. The linear model-based prediction mode may be limited to being applied to a relatively small-sized block. For example, the linear model-based prediction mode may be applied when the current block is less than or equal to 16x16 in size, and may not be applied when the current block is greater than 16x16 in size. This may allow for saving the number of bits required to encode intra prediction mode information for the current block.

Referring to FIG. 4, a residual sample of the current block may be derived S410.

The residual sample of the current block may be derived by performing at least one of dequantization or inverse transform on a transform coefficient decoded from a bitstream.

As a transform kernel for the inverse transform, a transform kernel for a pre-defined intra prediction mode in the encoding apparatus and decoding apparatus may be used. Here, the pre-defined intra prediction mode may be an intra prediction mode with characteristics similar to the linear model-based prediction mode according to the present disclosure.

For example, the pre-defined intra prediction mode may be a non-directional mode such as a planar mode or a DC mode.

Alternatively, an intra prediction mode may be derived based on pre-reconstructed samples around the current block, and the inverse transform may be performed based on a transform kernel for the derived intra prediction mode. For example, a gradient may be calculated from samples around the current block, and the intra prediction mode may be derived based on the calculated gradient, and a transform kernel may be selected based on the derived intra prediction mode. Alternatively, the intra prediction mode may be derived based on a template region of the current block, and the transform kernel may be selected based on the derived intra prediction mode.

Alternatively, a transform kernel corresponding to the linear model-based prediction mode may be explicitly signaled.

Alternatively, the transform kernel may be adaptively selected based on the size of the current block. For example, when the width or height of the current block is less than 16, the intra prediction mode may be derived based on the pre-reconstructed samples around the current block, and the transform kernel may be determined based on the derived intra prediction mode. Otherwise, a transform kernel for a pre-defined intra prediction mode in the encoding apparatus and decoding apparatus may be selected.

Referring to FIG. 4, the current block may be reconstructed based on the prediction sample and the residual sample of the current block S420.

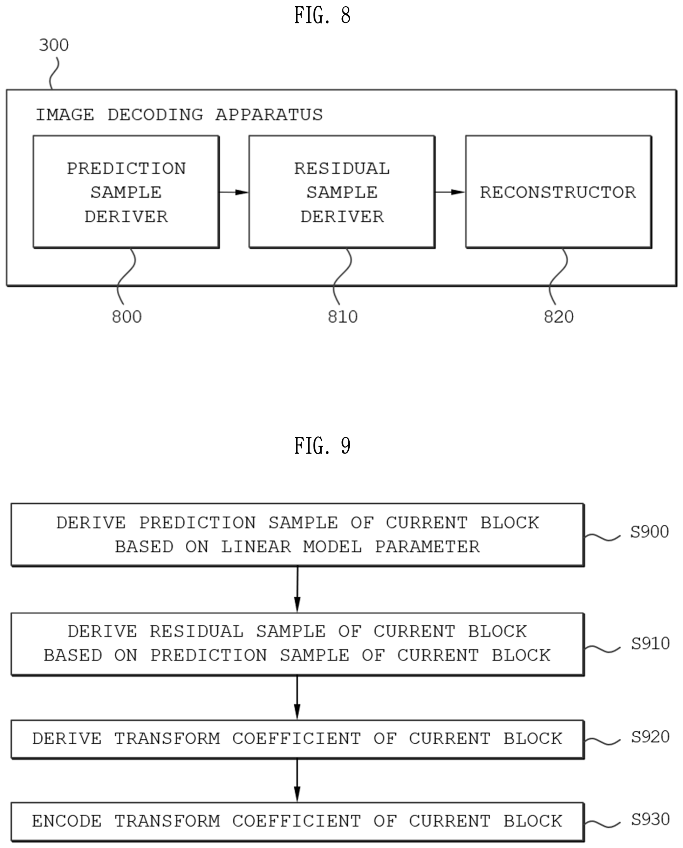

Figure 8 illustrates a schematic configuration of an image decoding apparatus that performs an image decoding method according to an embodiment of the present disclosure.

Referring to Figure 8, the image decoding apparatus 300 may include a prediction sample deriver 800, a residual sample deriver 810, and a reconstructor 820. The prediction sample deriver 800 may be configured in the intra predictor 331 of Figure 3, and the residual sample deriver 810 may be configured in the residual processor 320 of Figure 3.

The prediction sample deriver 800 may derive a prediction sample of the current block based on a linear model parameter. A method for deriving a prediction sample based on a linear model parameter has been described with reference to Figure 4.

The prediction sample deriver 800 may further include a linear model deriver (not shown). The linear model deriver may derive a linear model parameter for linear model prediction based on pre-reconstructed samples around the current block. This has been described in Embodiments 1 to 3 above.

The linear model deriver may derive a linear model parameter based on a pre-defined linear model-based prediction mode in the image decoding apparatus. Here, the pre-defined linear model-based prediction mode may correspond to any one of Embodiments 1 to 3 described above. The linear model deriver may adaptively derive the linear model parameter based on a syntax element according to Table 1.

The image decoding apparatus may define a plurality of linear model-based prediction modes. In this case, the linear model deriver may select one of the plurality of linear model-based prediction modes and derive a linear model parameter based on the selected one. For such selection, a syntax element according to Table 2 or Table 3 may be used.

As described with reference to Figure 4, the linear model deriver may derive a plurality of linear model parameters for the current block, and may select one of them.

The prediction sample deriver 800 may further include a reference sample pre-processor (not shown). The reference sample pre-processor may apply a predetermined pre-processing filter to reference samples for deriving a linear model parameter, as described with reference to Figure 4.

The prediction sample deriver 800 may adaptively apply a linear model-based prediction mode to the current block based on a component type and/or a size of the current block.

The residual sample deriver 810 may derive a residual sample of the current block. In other words, the residual sample deriver 810 may derive the residual sample by performing at least one of dequantization or inverse transform on a transform coefficient of the current block. Here, the inverse transform may be performed based on a predetermined transform kernel, and a method for determining the transform kernel has been described with reference to Figure 4.

The reconstructor 820 may reconstruct the current block based on the prediction sample and the residual sample of the current block.

Figure 9 illustrates an image encoding method performed by an image encoding apparatus according to an embodiment of the present disclosure.

Referring to Figure 9, a prediction sample of the current block may be derived based on a linear model parameter S900. A method for deriving a prediction sample based on a linear model parameter has been described with reference to Figure 4.

A linear model parameter for linear model prediction may be derived based on pre-reconstructed samples around the current block. This has been described in Embodiments 1 to 3 above.

A linear model parameter may be derived based on a pre-defined linear model-based prediction mode in the image encoding apparatus. Here, the pre-defined linear model-based prediction mode may correspond to any one of Embodiments 1 to 3 described above.

A syntax element related to the linear model-based prediction mode according to the present disclosure may be encoded into the bitstream. The syntax element may be signaled as shown in Table 1.

The image encoding apparatus may define a plurality of linear model-based prediction modes. In this case, one of the plurality of linear model-based prediction modes may be selected, and a linear model parameter may be derived based on the selected one. A syntax element related to the selected linear model-based prediction mode may be encoded into the bitstream. The syntax element may be signaled as shown in Table 2 or Table 3.

A plurality of linear model parameters may be derived for the current block, and one of them may be selectively used. A method for deriving a plurality of linear model parameters and a method for selecting an optimal linear model parameter have been described with reference to Figure 4. Information for specifying one of the plurality of linear model parameters may be encoded and may be added to the bitstream. For example, the information may be signaled as shown in Table 4.

A predetermined pre-processing filter may be applied to reference samples for deriving a linear model parameter, as described with reference to Figure 4.

The linear model-based prediction mode according to the present disclosure may be defined as an additional mode to the conventional non-directional modes and directional modes, or may be defined as a mode that replaces one of the conventional non-directional modes. The linear model-based prediction mode may be used as a candidate mode for configuring an MPM list. Alternatively, the linear model-based prediction mode may be restricted from being used as a candidate mode of the MPM list, and when a neighboring block referred to during the MPM list construction is a block encoded in the linear model-based prediction mode, the linear model-based prediction mode of the neighboring block may be substituted with another pre-defined intra prediction mode.

The linear model-based prediction mode according to the present disclosure may be adaptively applied based on a component type and/or a size of the current block, as described with reference to Figure 4.

Referring to Figure 9, a residual sample of the current block may be derived based on a prediction sample of the current block S910. In other words, the residual sample may be derived based on a difference between an original sample and the prediction sample of the current block.

Referring to Figure 9, at least one of transform or quantization may be applied to the residual sample of the current block, and a transform coefficient may be derived therefrom S920.

The transform may be performed based on a predetermined transform kernel, and a method for determining the transform kernel has been described with reference to Figure 4.

Referring to Figure 9, the transform coefficient of the current block may be encoded to generate a bitstream S930.

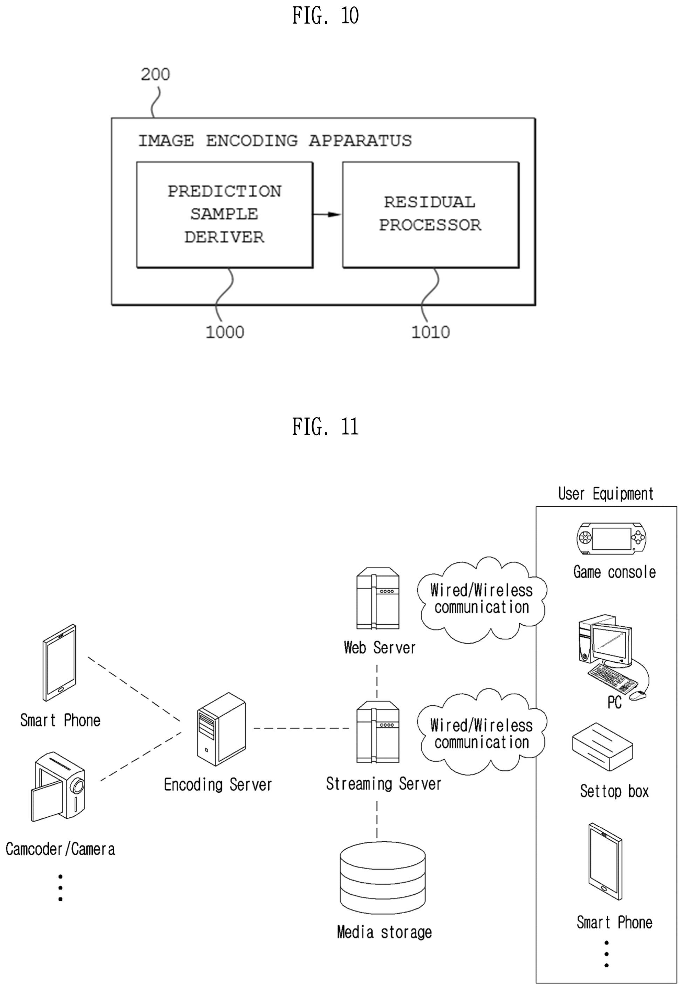

Figure 10 illustrates a schematic configuration of an image encoding apparatus performing an image encoding method according to an embodiment of the present disclosure.

Referring to Figure 10, the image encoding apparatus 200 may include a prediction sample deriver 1000 and a residual processor 1010. The prediction sample deriver 1000 may be configured in the intra predictor 222 of Figure 2, and the residual processor 1010 may be configured in the residual processor 230 of Figure 2.

The prediction sample deriver 1000 may derive a prediction sample of the current block based on a linear model parameter. A method for deriving a prediction sample based on a linear model parameter has been described with reference to Figure 4.

The prediction sample deriver 1000 may further include a linear model deriver (not shown). The linear model deriver may derive a linear model parameter for linear model prediction based on pre-reconstructed samples around the current block. This has been described in Embodiments 1 to 3 above.

The linear model deriver may derive a linear model parameter based on a pre-defined linear model-based prediction mode in the image encoding apparatus. Here, the pre-defined linear model-based prediction mode may correspond to any one of Embodiments 1 to 3 described above.

The prediction sample deriver 1000 may generate a syntax element related to the linear model-based prediction mode according to the present disclosure. This may be encoded by an entropy encoder 240 and inserted into a bitstream. The syntax element may be signaled as shown in Table 1.

The image encoding apparatus may define a plurality of linear model-based prediction modes. In this case, the linear model deriver may select one of the plurality of linear model-based prediction modes and derive a linear model parameter based on the selected mode. The linear model deriver may generate a syntax element related to the selected linear model-based prediction mode. This may be encoded by the entropy encoder 240 and inserted into the bitstream. The syntax element may be signaled as shown in Table 2 or Table 3.

As described with reference to Figure 4, the linear model deriver may derive a plurality of linear model parameters for the current block and may select one of them. The linear model deriver may generate information for specifying one of the plurality of linear model parameters. This may be encoded by the entropy encoder 240 and inserted into the bitstream. For example, the information may be signaled as shown in Table 4.

The prediction sample deriver 1000 may further include a reference sample pre-processor (not shown). The reference sample pre-processor may apply a predetermined pre-processing filter to reference samples for deriving the linear model parameter, as described with reference to Figure 4.

The prediction sample deriver 1000 may adaptively apply the linear model-based prediction mode to the current block based on a component type and/or a size of the current block.

The residual processor 1010 may derive a residual sample of the current block based on a prediction sample of the current block and may derive a transform coefficient by applying at least one of transform or quantization to the residual sample of the current block. Here, the transform may be performed based on a predetermined transform kernel, and a method for determining the transform kernel has been described with reference to Figure 4.

The residual processor 1010 may generate residual information related to the transform coefficient, and the residual information may be encoded by the entropy encoder 240 and inserted into the bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an augmented reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

FIG. 11 shows an example of a contents streaming system to which embodiments of the present disclosure may be applied.

Referring to FIG. 11 a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   deriving a prediction sample of a current block based on a linear model parameter of the current block;
   deriving a residual sample of the current block; and
   reconstructing the current block based on the prediction sample and the residual sample of the current block,
   wherein the linear model parameter is derived based on one or more reference samples within a neighboring region of the current block, and
   wherein the prediction sample is derived by applying the linear model parameter to at least one of a coordinate of the prediction sample within the current block or a pre-reconstructed sample around the current block.

2. The image decoding method of claim 1, wherein the linear model parameter is derived based on at least one of a first reference sample included in a first reference sample line of the current block, a coordinate of the first reference sample, or a left or upper reference sample of the first reference sample.

3. The image decoding method of claim 2, wherein at least one of the left or upper reference sample of the first reference sample is included in a second reference sample line of the current block.

4. The image decoding method of claim 1, wherein the neighboring region includes at least one of a left neighboring region, an upper neighboring region, an upper-left neighboring region, an upper-right neighboring region, or a lower-left neighboring region.

5. The image decoding method of claim 1, wherein the linear model parameter is derived as one of a plurality of linear model parameters,

   wherein the plurality of linear model parameters are derived for a plurality of sub-regions within the neighboring region, respectively, and
   wherein the plurality of sub-regions includes at least two of a left neighboring region, an upper neighboring region, an upper-left neighboring region, an upper-right neighboring region, or a lower-left neighboring region.

6. The image decoding method of claim 1, further comprising:
   Obtaining, from a bitstream, at least one of a first flag indicating whether a linear model-based prediction mode is available or a second flag indicating whether the linear model-based prediction mode is applied to the current block.

7. The image decoding method of claim 6, further comprising:
obtaining, from the bitstream, an index specifying one of a plurality of pre-defined linear model-based prediction modes.

8. The image decoding method of claim 1, wherein a predetermined filter is applied to one or more reference samples within the neighboring region of the current block.

9. The image decoding method of claim 8, wherein at least one of whether the predetermined filter is applied or a type of the predetermined filter is determined based on a size of the current block.

10. The image decoding method of claim 1, wherein the residual sample of the current block is derived by performing an inverse transform on a transform coefficient of the current block, and
wherein the inverse transform is performed based on a transform kernel for a pre-defined non-directional mode or an intra prediction mode derived based on the neighboring region.

11. An image encoding method, comprising:

deriving a prediction sample of a current block based on a linear model parameter of the current block;
deriving a residual sample of the current block based on the prediction sample of the current block;
deriving a transform coefficient from the residual sample of the current block; and
generating a bitstream by encoding the transform coefficient,
wherein the linear model parameter is derived based on one or more reference samples within a neighboring region of the current block, and
wherein the prediction sample is derived by applying the linear model parameter to at least one of a coordinate of the prediction sample within the current block or a pre-reconstructed sample around the current block.

12. A computer-readable storage medium storing a bitstream generated by the image encoding method according to claim 11.

13. A method for transmitting data for image information, comprising:

obtaining a bitstream for the image information, wherein the bitstream is generated by deriving a prediction sample of a current block based on a linear model parameter of the current block, deriving a residual sample of the current block based on the prediction sample of the current block, deriving a transform coefficient from the residual sample of the current block, and encoding the transform coefficient; and
transmitting data including the bitstream,
wherein the linear model parameter is derived based on one or more reference samples within a neighboring region of the current block, and
wherein the prediction sample is derived by applying the linear model parameter to at least one of a coordinate of the prediction sample within the current block or a pre-reconstructed sample around the current block.

FIG. 1

FIG. 2

INPUT IMAGE (PICTURE) → 

ENCODING APPARATUS (200)

- IMAGE PARTITIONER (210)
- 220 (INTER PREDICTOR 221, INTRA PREDICTOR 222)
- DPB / MEMORY (270)
- FILTER (260)
- 231 / 230 (+)
- TRANSFORMER (232)
- QUANTIZER (233)
- ENTROPY ENCODER (240) → BITSTREAM
- DEQUANTIZER (234)
- INVERSE TRANSFORMER (235)
- 250 (+)

EP 4 679 832 A1

FIG. 3

BITSTREAM

DECODING
APPARATUS
300

ENTROPY
DECODER
310

DEQUANTIZER
321

320

INVERSE
TRANSFORMER
322

340

FILTER
350

RECONSTRUCTED IMAGE
(PICTURE)

INTRA
PREDICTOR
331

330

INTER
PREDICTOR
332

MEMORY

DPB

360

EP 4 679 832 A1

FIG. 4

DERIVE PREDICTION SAMPLE OF CURRENT BLOCK
BASED ON LINEAR MODEL PARAMETER — S400

DERIVE RESIDUAL SAMPLE OF CURRENT BLOCK — S410

RECONSTRUCT CURRENT BLOCK
BASED ON PREDICTION SAMPLE AND RESIDUAL SAMPLE
OF CURRENT BLOCK — S420

FIG. 5

| | | | a<br>(-1, -1) | b<br>(0, -1) | c<br>(1, -1) | d<br>(2, -1) | e<br>(3, -1) | f<br>(4, -1) | g<br>(5, -1) | h<br>(6, -1) | i<br>(7, -1) |
|---|---|---|---|---|---|---|---|---|---|---|---|
| | | | j<br>(-1, 0) | | | | | | | | |
| | | | k<br>(-1, 1) | | | | | | | | |
| | | | l<br>(-1, 2) | | | | | | | | |
| | | | m<br>(-1, 3) | | | | | | | | |
| | | | n<br>(-1, 4) | | | | | | | | |
| | | | o<br>(-1, 5) | | | | | | | | |
| | | | p<br>(-1, 6) | | | | | | | | |
| | | | q<br>(-1, 7) | | | | | | | | |

## FIG. 6

| | AA (-3, -3) | AB (-2, -3) | AC (-1, -3) | AD (0, -3) | AE (1, -3) | AF (2, -3) | AG (3, -3) | AH (4, -3) | AI (5, -3) | AJ (6, -3) | AK (7, -3) |
|---|---|---|---|---|---|---|---|---|---|---|---|
| | AL (-3, -2) | A (-2, -2) | B (-1, -2) | C (0, -2) | D (1, -2) | E (2, -2) | F (3, -2) | G (4, -2) | H (5, -2) | I (6, -2) | J (7, -2) |
| | AM (-3, -1) | K (-2, -1) | | | | | | | | | |
| | AO (-3, 0) | L (-2, 0) | | | | | | | | | |
| | AP (-3, 1) | M (-2, 1) | | | | | | | | | |
| | AQ (-3, 2) | N (-2, 2) | | | | | | | | | |
| | AR (-3, 3) | O (-2, 3) | | | | | | | | | |
| | AS (-3, 4) | P (-2, 4) | | | | | | | | | |
| | AT (-3, 5) | Q (-2, 5) | | | | | | | | | |
| | AU (-3, 6) | R (-2, 6) | | | | | | | | | |
| | AV (-3, 7) | S (-2, 7) | | | | | | | | | |

## FIG. 7

▨ : Reconstructed Region

▨ : Reference sample for Template Region

▨ : Template Region

FIG. 8

300

IMAGE DECODING APPARATUS

| PREDICTION SAMPLE DERIVER | → | RESIDUAL SAMPLE DERIVER | → | RECONSTRUCTOR |

800                    810                    820

FIG. 9

DERIVE PREDICTION SAMPLE OF CURRENT BLOCK BASED ON LINEAR MODEL PARAMETER — S900

DERIVE RESIDUAL SAMPLE OF CURRENT BLOCK BASED ON PREDICTION SAMPLE OF CURRENT BLOCK — S910

DERIVE TRANSFORM COEFFICIENT OF CURRENT BLOCK — S920

ENCODE TRANSFORM COEFFICIENT OF CURRENT BLOCK — S930

FIG. 10

200

IMAGE ENCODING APPARATUS

| PREDICTION SAMPLE DERIVER | → | RESIDUAL PROCESSOR |

1000                          1010

FIG. 11

## INTERNATIONAL SEARCH REPORT

| | International application No. |
|---|---|
| | **PCT/KR2024/002910** |

**A. CLASSIFICATION OF SUBJECT MATTER**

**H04N 19/593**(2014.01)i; **H04N 19/11**(2014.01)i; **H04N 19/105**(2014.01)i; **H04N 19/132**(2014.01)i; **H04N 19/70**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 19/105(2014.01); H04N 19/11(2014.01); H04N 19/119(2014.01); H04N 19/132(2014.01); H04N 19/186(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인트라 예측(intra prediction), 선형 모델(linear model), 파라미터 (parameter), 레지듀얼 샘플(residual sample), 참조 샘플(reference sample)

**C. DOCUMENTS CONSIDERED TO BE RELEVANT**

| Category* | Citation of document, with indication, where appropriate, of the relevant passages | Relevant to claim No. |
|---|---|---|
| X | WO 2019-031703 A1 (LG ELECTRONICS INC.) 14 February 2019 (2019-02-14) See paragraphs [0160]-[0175]; and claim 1. | 1-7,11-13 |
| Y | | 8-10 |
| Y | WO 2019-107911 A1 (ELECTRONICS AND TELECOMMUNICATIONS RESEARCH INSTITUTE) 06 June 2019 (2019-06-06) See paragraph [0332]. | 8-9 |
| Y | WO 2022-216124 A1 (LG ELECTRONICS INC.) 13 October 2022 (2022-10-13) See paragraphs [0262]-[0264]. | 10 |
| A | KR 10-2021-0006993 A (LG ELECTRONICS INC.) 19 January 2021 (2021-01-19) See claim 1. | 1-13 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2024** | **17 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/002910**

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0002091 A (KT CORPORATION) 05 January 2023 (2023-01-05)<br>See paragraphs [0246]-[0249]. | 1-13 |

Form PCT/ISA/210 (second sheet) (July 2022)

## INTERNATIONAL SEARCH REPORT
### Information on patent family members

International application No.

**PCT/KR2024/002910**

| Patent document cited in search report | | | Publication date (day/month/year) | Patent family member(s) | | | Publication date (day/month/year) |
|---|---|---|---|---|---|---|---|
| WO | 2019-031703 | A1 | 14 February 2019 | None | | | |
| WO | 2019-107911 | A1 | 06 June 2019 | CN | 111434109 | A | 17 July 2020 |
| | | | | CN | 116684615 | A | 01 September 2023 |
| | | | | CN | 116684616 | A | 01 September 2023 |
| | | | | CN | 116684617 | A | 01 September 2023 |
| | | | | CN | 116684618 | A | 01 September 2023 |
| | | | | CN | 116684619 | A | 01 September 2023 |
| | | | | CN | 116684620 | A | 01 September 2023 |
| | | | | CN | 117176958 | A | 05 December 2023 |
| | | | | CN | 117201794 | A | 08 December 2023 |
| | | | | EP | 3737093 | A1 | 11 November 2020 |
| | | | | EP | 3737093 | A4 | 09 February 2022 |
| | | | | KR | 10-2019-0062302 | A | 05 June 2019 |
| | | | | KR | 10-2023-0074102 | A | 26 May 2023 |
| | | | | KR | 10-2023-0074681 | A | 31 May 2023 |
| | | | | KR | 10-2023-0107196 | A | 14 July 2023 |
| | | | | KR | 10-2023-0107197 | A | 14 July 2023 |
| | | | | KR | 10-2023-0107198 | A | 14 July 2023 |
| | | | | KR | 10-2023-0107199 | A | 14 July 2023 |
| | | | | KR | 10-2023-0107531 | A | 17 July 2023 |
| | | | | KR | 10-2023-0132419 | A | 15 September 2023 |
| | | | | KR | 10-2023-0132420 | A | 15 September 2023 |
| | | | | KR | 10-2557090 | B1 | 19 July 2023 |
| | | | | US | 11218704 | B2 | 04 January 2022 |
| | | | | US | 2020-0413069 | A1 | 31 December 2020 |
| | | | | US | 2022-0070474 | A1 | 03 March 2022 |
| | | | | US | 2023-0353755 | A1 | 02 November 2023 |
| | | | | US | 2023-0362389 | A1 | 09 November 2023 |
| | | | | US | 2023-0370613 | A1 | 16 November 2023 |
| | | | | US | 2023-0370614 | A1 | 16 November 2023 |
| | | | | US | 2023-0370615 | A1 | 16 November 2023 |
| | | | | US | 2023-0370616 | A1 | 16 November 2023 |
| | | | | US | 2024-0080454 | A1 | 07 March 2024 |
| | | | | US | 2024-0080455 | A1 | 07 March 2024 |
| WO | 2022-216124 | A1 | 13 October 2022 | CN | 117441335 | A | 23 January 2024 |
| | | | | EP | 4322528 | A1 | 14 February 2024 |
| | | | | KR | 10-2023-0165331 | A | 05 December 2023 |
| KR | 10-2021-0006993 | A | 19 January 2021 | CN | 112369023 | A | 12 February 2021 |
| | | | | CN | 112369023 | B | 14 July 2023 |
| | | | | CN | 116708833 | A | 05 September 2023 |
| | | | | CN | 116708835 | A | 05 September 2023 |
| | | | | CN | 116708837 | A | 05 September 2023 |
| | | | | CN | 116708838 | A | 05 September 2023 |
| | | | | EP | 3799428 | A1 | 31 March 2021 |
| | | | | EP | 3799428 | A4 | 14 April 2021 |
| | | | | KR | 10-2023-0018551 | A | 07 February 2023 |
| | | | | KR | 10-2024-0051331 | A | 19 April 2024 |
| | | | | KR | 10-2493516 | B1 | 31 January 2023 |
| | | | | KR | 10-2658215 | B1 | 18 April 2024 |
| | | | | US | 10887596 | B2 | 05 January 2021 |

Form PCT/ISA/210 (patent family annex) (July 2022)

**INTERNATIONAL SEARCH REPORT**
Information on patent family members

International application No.

**PCT/KR2024/002910**

| Patent document cited in search report | | Publication date (day/month/year) | Patent family member(s) | | | Publication date (day/month/year) |
|---|---|---|---|---|---|---|
| | | | US | 11356668 | B2 | 07 June 2022 |
| | | | US | 11973954 | B2 | 30 April 2024 |
| | | | US | 2020-0195930 | A1 | 18 June 2020 |
| | | | US | 2021-0084305 | A1 | 18 March 2021 |
| | | | US | 2022-0272351 | A1 | 25 August 2022 |
| | | | US | 2024-0048714 | A1 | 08 February 2024 |
| | | | WO | 2020-009357 | A1 | 09 January 2020 |
| KR 10-2023-0002091 | A | 05 January 2023 | WO | 2023-277486 | A1 | 05 January 2023 |

Form PCT/ISA/210 (patent family annex) (July 2022)